# EUROPEAN PATENT APPLICATION

(11) **EP 4 684 891 A1**
(43) Date of publication of application: **28.01.2026**
(21) Application number: 24461600.9
(22) Date of filing: 26.07.2024
(51) Int. Cl.: B08B 9/08, B08B 11/00

(54) **TANK CLEANING ARRANGEMENT**

(71) Applicant: B/E Aerospace, Inc., Winston Salem, NC 27105 (US)
(72) Inventor: SWIRNIAK, Pawel, 51-317 Wroclaw (PL); HERBIK, Iwona, 51-317 Wroclaw (PL); KROCZEK, Piotr Jacek, 51-317 Wroclaw (PL); SLOMIANY, Krzysztof, 51-317 Wroclaw (PL)
(74) Representative: Dehns

(57) **Abstract**

A tank cleaning arrangement comprising a tank (200) having an inlet (220) and an outlet (130); a flexible bladder (300) located inside the tank, the bladder having a first end (300a) in fluid communication with the tank inlet and a second end (300b) in fluid communication with the tank outlet, the bladder defining an interior to receive content via the inlet and to expel content via the outlet, the bladder positioned inside the tank such that a space (250) exists around the bladder inside the tank; the arrangement further comprising a pressure port (320) extending from outside the tank into the space around the bladder via which varying pressure can be applied to the space to cause varying expansion and contraction of the bladder.

## Description

### TECHNICAL FIELD

The present disclosure relates to ways of cleaning the interior of a tank such as, but not exclusively, a waste tank e.g. in an aircraft.

### BACKGROUND

Tanks or reservoirs containing matter such as waste from a sanitation system, or other matter, which may be contaminated or hazardous or generally undesirable if left on the inner surfaces of the tank for a period of time often include a device that extends into and sprays water or some cleaning fluid around the tank to clean the tank. This can avoid the need for manual cleaning of the tank which can be unpleasant or even dangerous. Furthermore, the tanks are often too small to enable a person to access the interior to clean it properly, or the tank may be vacuum sealed and so not accessible for manual cleaning and/or access to the tanks may be too difficult for the tank to be cleaned by a person. Passenger aircraft include large tanks for human waste from the aircraft toilets. These tanks are emptied after a flight and the inside of the tank is cleaned. This is usually done by means of a device, known as a rinse nipple, having nozzles through which pressurised water or a cleaning solution is sprayed around the interior of the tank.

A conventional rinse nipple includes a housing part to which a rinse hose providing the cleaning fluid is connected. The housing extends through the tank wall. A rinse head is provided at the end of the housing located inside the tank. The rinse head is provided with multiple openings or nozzles and the pressurised fluid is ejected out through the nozzles to clean the tank. Some rinse nipples have a rotatable rinse head. To avoid the need for power to be supplied to rotate the rinse head, the openings or nozzles are angled and offset relative to the axis of rotation of the head. This positioning provides momentum about the axis to cause the head to spin about the axis thus maximising the coverage of the fluid inside the tank.

Whilst the multiple nozzles and spinning head ensures that the fluid is sprayed as much as possible around the tank interior, due to the presence of various components and fittings that may be provided on the tank walls, extending to the tank interior, there may be some areas that are effectively obstructed or hidden by these components and are not reached by the spray from the spinning head. Furthermore, particularly when the tanks are large. The fluid may not reach the bottom of the tank, or may not reach the bottom with sufficient force to provide effective cleaning. This can result in waste material or the like remaining in those areas where the pressurised fluid does not reach, and clogging or building up. The tank cannot, therefore, be fully purged of all of the waste, which can cause contamination of the tank. Furthermore, precision is required to assemble the rinse nozzle to the tank and there are restrictions on where the rinse nozzle can be mounted to the tank. For best cleaning, the rinse device needs to be as high as possible in or on the tank. Also, the nozzles of the rinse device can become blocked or clogged. In addition, due to the corrosive nature of the contents of the tank, these tanks usually have to be made of e.g. stainless steel or other non-corroding material, which means that the tanks are heavy and expensive. There is, therefore, a need for a cleaning arrangement that can ensure that a greater area of the tank interior is contacted by the cleaning fluid using a simple and reliable assembly, and which allows for the use of cheaper and/or lighter materials for the tank.

### SUMMARY

According to the present disclosure, there is provided a tank cleaning arrangement comprising a tank having an inlet and an outlet; a flexible bladder located inside the tank, the bladder having a first end in fluid communication with the tank inlet and a second end in fluid communication with the tank outlet, the bladder defining an interior to receive content via the inlet and to expel content via the outlet, the bladder positioned inside the tank such that a space exists around the bladder inside the tank; the arrangement further comprising a pressure port extending from outside the tank into the space around the bladder via which varying pressure can be applied to the space to cause varying expansion and contraction of the bladder.

### BRIEF DESCRIPTION

Examples of the cleaning arrangement according to this disclosure will be described with reference to the drawings. It should be noted that these are merely examples and variations are possible within the scope of the claims.
Figure 1 shows an example of a known tank and rinse arrangement for the purposes of explanation.
Figure 2 is a transparent view of an assembly according to the disclosure
Figure 3 is a system diagram of an assembly according to the disclosure.
Figure 4 shows an example of a bladder of an assembly according to the disclosure.
Figure 5 shows an example of a tank of an assembly according to the disclosure.
Figure 6 shows on example of a bladder of an assembly according to the disclosure with a level sensing device.
Figure 7 is a close-up view of the level sensing device of Fig. 6.
Figure 8 shows on example of a bladder of an assembly according to the disclosure with an alternative level sensing device.
Figure 9 is a close-up view of the level sensing device of Fig. 8.
Figure 10A shows on example of a bladder of an assembly according to the disclosure with an alternative level sensing device in a first state.
Figure 10B is a close-up view of the level sensing device of Fig. 10A.
Figure 11A shows on example of a bladder of an assembly according to the disclosure with the alternative level sensing device of Figs. 10A and 10B in a second state.
Figure 11B is a close-up view of the level sensing device of Fig. 11A.

### DETAILED DESCRIPTION

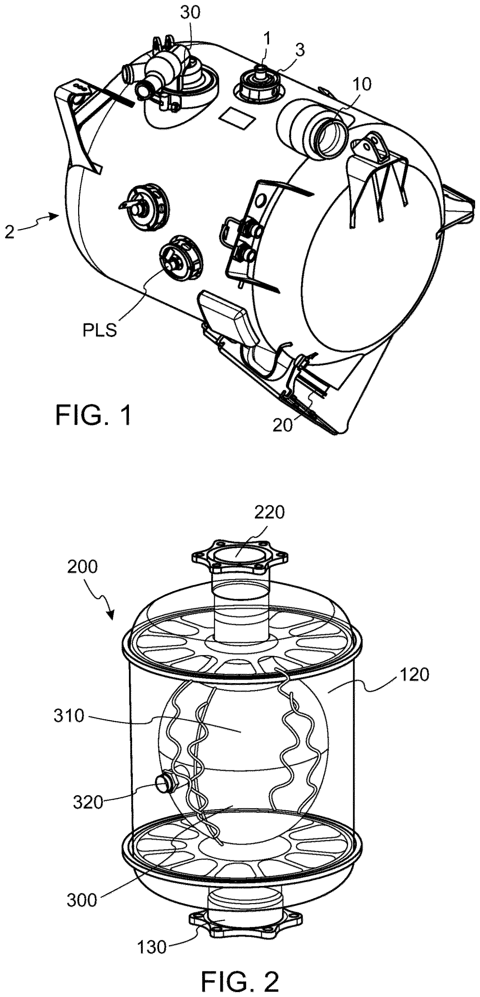

A typical tank having a typical rinse device is shown in Fig. 1. A rinse nipple 3 is shown mounted in the wall 12 of a tank 2 or vat or other reservoir. The rinse nipple 3 is connected, in use, to a rinse port 1 from which rinse fluid is provided to the rinse nozzle from a rinse fluid supply (not shown). The tank has an inlet 10 via which the waste is received from e.g. the sanitation system/lavatories etc. The waste is collected in the tank until the tank is full and/or due to be emptied in a ground operation. The tank is emptied by opening the drain valve 20. The tank then needs to be cleaned to remove debris or waste material that has remained inside the tank e.g. on the interior surface of the tank. This is conventionally done by applying rinse fluid to the rinse nipple 3 which dispenses the fluid around the interior of the tank. Apertures or may be formed in the nipple 3 such that as rinse fluid is provided to the nozzle 3 it is sprayed out through the jets around the interior of the tank to clean the tank. Typically, the nipple includes a rinse head in which the apertures are formed, which is arranged to rotate about an axis of rotation to eject a pressurised fluid into the tank. The jets can be positioned offset from the axis of rotation and at angles such that the ejection of the pressurised fluid provides a force that causes the rinse head to rotate relative to the housing about the axis. The pressurisation of the fluid and the rotation of the rinse head provides a good range of coverage of the interior of the tank with cleaning fluid. In some cases, however, areas may exist, due to the presence of other components on the inside of the tank, that fluid from the rinse head cannot reach. Alternatively, because the rinse nozzle is typically small and mounted into the top of the tank, the pressurized fluid may not adequately reach the bottom or other locations in the interior of the tank, or at least not with sufficient force to adequately clean the tank. Furthermore, the jets do not clean the tank in a symmetrical manner.

The tank may also be provided with a vent and demister 30 mounted through a port in the tank wall 12. Level sensors 40 may also be provided to measure the level of waste in the tank to provide an indication as to when the tank needs to be emptied.

Various rinse nipple and level sensor arrangements are known. These are, however, all mounted to the tank which creates a relatively large envelope with several outer components that are vulnerable to damage and/or contamination/collection of debris.

With such conventional tanks, because the various ancilliary devices mentioned above are mounted to the tank wall, and also because the tank interior is in direct contact with the waste, which may be corrosive, the tank needs to be made of strong, robust and, therefore, heavy material such as stainless steel. Stainless steel is expensive as well as heavy which has a negative impact on weight and cost restrictions. Also, the most popular stainless steel (e.g. 304 ss) can experience issues with corrosion resistance with certain commonly used rinsing solutions used in e.g. the aircraft industry. Because space may be restricted where such tanks are installed, the contents might slosh over into the vent line and/or into the demister or rinse nipple which can cause deterioration of these parts over time.

The cleaning arrangement according to this disclosure is designed to address these problems as will be described with reference to Figs. 2 to 11B, and to provide effective cleaning of the tank without the need for a rinse nipple and other related components to be mounted to the tank. The arrangement also enables the tank to be made of different materials, which do not need to be so strong and corrosion-resistant and so which can be cheaper and lighter.

Figure 2 shows an example of a tank 200 having a cleaning arrangement according to this disclosure. The tank is of the conventional type such as shown ins Figs. 1 and 2, the tank has a tank wall 120 defining the tank interior, a waste or other fluid inlet port 220 via which the tank contents e.g. waste, enter the tank and a drain port 130 via which the content exits the tank when the tank is emptied. As described further below, level sensors may be provided. Unlike the conventional cleaning arrangement described above, with the cleaning arrangement according to this disclosure, described further below, there is no need for a rinse port for a rinse nozzle in the tank wall. There is also no need for a vent/demister.

Instead, the cleaning arrangement according to this disclosure comprises an expandable or elastic bladder 300 located inside the tank, connected at one end to the fluid inlet port 220 and at the other end to the drain port 130. The bladder 300 is located within the tank 200 interior, with the tank defining an outer shell of the arrangement. The bladder 300 defines the waste-receiving volume 310 of the arrangement. Because the bladder contains the waste, and the waste does not, therefore, come into direct contact with the tank, the tank can be made of a cheaper, lighter material e.g. aluminium.

A vacuum port 320 is provided through the tank wall to the tank interior. The vacuum port has a first end, external to the tank, which is arranged to be connected to a vacuum supply, and a second end that opens into the tank interior to create a vacuum in the tank interior around the bladder, via the port.

The bladder 300 is made of an elastic or expandable material so that the bladder can expand and deflate, as described further below. Examples of suitable materials for the bladder include rubber or silicone.

Application of pressure via the vacuum port 320, and the expanding and retracting of the bladder 300 responsive to the pressure, regulates waste transportation into and through the bladder, and rinsing of the bladder.

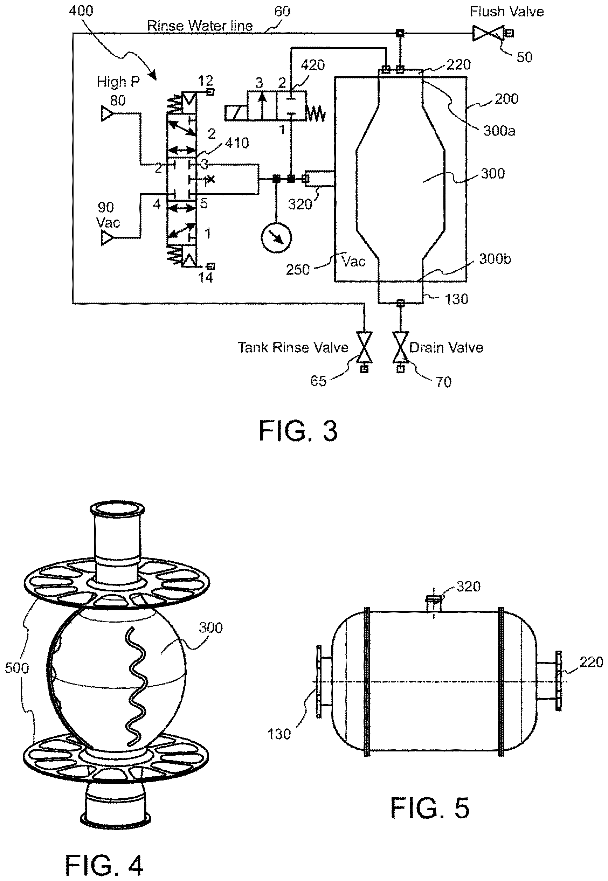

Operation of the cleaning arrangement will be described with reference to the examples shown in the drawings. First, reference is made to Fig. 3 which shows the tank 200 and bladder 300 as well as a vacuum control valve arrangement for controlling the pressure inside the tank around the bladder via the vacuum port 320. This is one example of how the pressure around the bladder can be controlled. Other solutions are also possible provided pressure is applied, as required, to control the size of the bladder volume 310.

The inlet port 220 of the tank, in fluid engagement with the inlet end 300a of the bladder 300 is, in use, fluidly connected to the waste source (e.g. to a toilet or the like), for example via a flush valve 50, and also to a source of rinse fluid e.g. via a rinse water line 60 and e.g. a rinse valve 65. The drain port 130 of the tank is in fluid connection with the opposite end 300b of the bladder and may be connected to a drain valve 70. The vacuum port 320 is arranged to be connected, in use, to a pressure source e.g. via a valve assembly 400.

In the example shown, the valve assembly includes a first, control, valve 410 that selectively connects the valve port 130 to a source of high pressure 80 or a vacuum source 90. A second vale 420 is provided between the valve port 130 and the inlet port 220.

In a first stage of operation of the tank arrangement, waste is conveyed into the bladder e.g. during a flush operation, where the flush valve (if present) is opened to eject waste into the tank bladder. For this operation, a vacuum is first applied to the interior of the tank, in the space 250 around the bladder 300, via the vacuum port 320. In the example shown, this is done by moving the control valve 410 to a position that fluidly connects the vacuum source 90 to the vacuum port 320 (position 2 in Fig. 3). Initially, the flush valve is kept closed and so the bladder 300 cannot expand in response to the reduced pressure around it within the outer shell of the tank. When the vacuum around the bladder in the tank has reached a desired negative pressure value, the control valve 410 closes (i.e. back to its neutral position) or the vacuum supply to the port is stopped in any other way, to effectively close the vacuum port 320. The flush cycle can then be started by opening the flush valve and waste is transported into the bladder 300 via the inlet 220. Because the bladder is elastic, it will expand radially outwards due to the vacuum around it. When the flush valve is closed, the control valve 410 then cycles to position 2 to again replenish the vacuum in the tank for the next flush operation, and the second valve 420, which fluidly connects the inside of the bladder and the space between the tank and the bladder, opens and operates to balance the pressure between the vacuum space between the bladder and the outer shell and the bladder interior, which causes the bladder to collapse to the extent possible based on the amount of waste inside the bladder. This means that the waste is contained in the smallest possible volume. The flush cycle is thereby ended and the assembly is ready for the next flush.

This is just one example of a flush operation and other control mechanisms can be used to create the vacuum around the bladder and then balance the pressure inside and outside of the bladder to generate the expansion/collapse motion of the bladder.

A second stage of operation of the arrangement is the drain operation whereby waste is ejected/drained from the bladder to empty the tank. Drainage of the tank is typically a ground operation which may be performed e.g. after each flight or at regular intervals.

The bladder 300 now contains waste, as described above, but is collapsed to the smallest possible size to contain the waste.

The drain valve of the tank is opened to commence the drain operation. For the drain operation, the vacuum port is now connected to a high pressure source 80 e.g. by moving the control valve of the example shown to position 1. The pressure in the space between the bladder 300 and the outer shell of the tank thus increases and squeezes the bladder 300 thus forcing waste out of the bladder through the drain.

Once the tank has been drained, it needs to be cleaned to remove any waste residue from the interior. With the arrangement of the invention, any residue waste will be on the interior of the bladder, since waste does not come into direct contact with the tank itself.

The third stage of operation is therefore the rinsing stage. First, the drain valve is closed. The interior of the bladder and the space between the tank and the bladder are fluidly connected (in the example shown, this is done by opening the second valve 420) to balance the pressure inside and outside the bladder. This means that there is minimal resistance to affect filling the bladder with cleaning/rinsing fluid.

Cleaning fluid is then provided to the interior of the bladder 300. In the example shown, this is done by connecting the supply of cleaning fluid with the tank inlet (e.g. by opening a tank rinse valve 65). The bladder should not be completely filled, as some air pocket is required inside the bladder. As an example, the bladder may be filled to 20 - 50% of its maximum volume. Once the desired amount of cleaning fluid is in the bladder, the fluid connection between the bladder interior and the space between the tank and the bladder is closed (e.g. by closing the second valve 420 - which, in the example shown, is a shut-off valve). Then, alternating high pressure and low pressure/vacuum is provided to the space around the bladder, in the tank, via the vacuum port 320. In the example shown, this is done by alternating the position of the control valve 410 to cycle the connection between the high pressure source and the vacuum source and the vacuum port. Other ways are also possible for alternately applying high and low pressure to the tank. This cycle of high and low pressure causes the bladder to expand and collapse in a cycle which causes the cleaning fluid inside the bladder to slosh around the bladder, effectively washing the inside of the bladder. This continuous expanding/contracting of the bladder and sloshing of the cleaning fluid prevents solid matter building up on the interior of the bladder.

Once the rinsing stage is complete (e.g. after a predetermined time, which can e.g. be controlled by a controller), the cleaning fluid can be drained from the bladder by opening the drain valve. The draining can be enhanced by applying the high pressure via the vacuum port to squeeze the bladder.

The drain is then closed and the tank is ready for further use.

Because the bladder is elastic, and may have very thin walls to optimise effective suction of fluid, additional support may be provided to position the bladder inside the tank e.g. to centre the bladder and to avoid the bladder contacting the tank walls. Fig. 4 shows an example of positioning members 500 located around the bladder 300. The positioning members 500 may be formed integrally with the bladder 300 or may be separately formed and attached to the bladder.

Because the bladder, which contains the waste and the cleaning fluid, these substances do not come into direct contact with the tank inside which the bladder is located. Also, no rinse nipple or other auxiliary ports are required to be incorporated into the tank. Because of this, the tank itself can be made of a lighter, less expensive and less corrosion-resistant material such as aluminium. Fig. 5 shows an example of the simple tank that can be used as part of the arrangement of the invention.

Because the waste content is in the bladder 300, the conventional way of sensing the level of waste in the tank by means of sensors on the tank, for example, is not appropriate in this design.

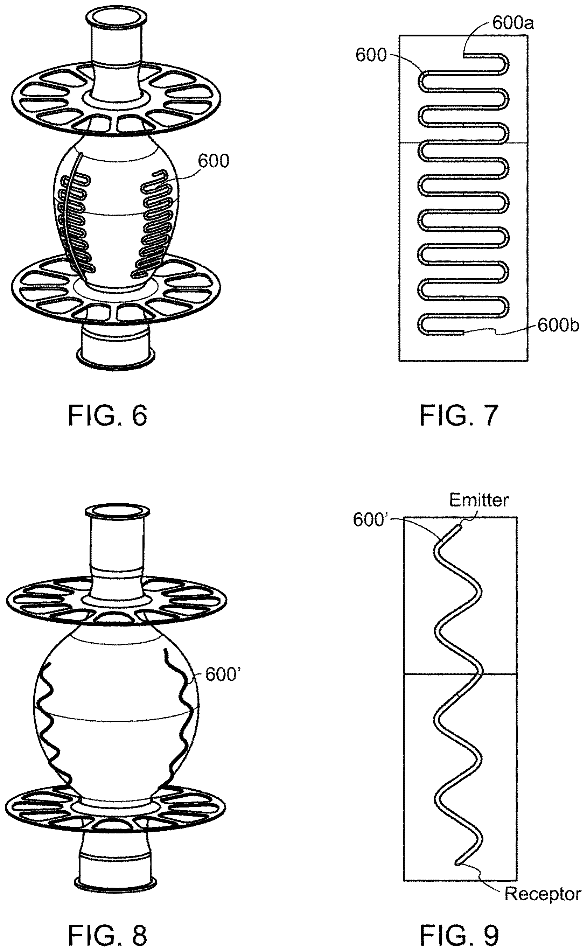

If level sensors are required, it is possible, in examples, to incorporate a level sensing feature on the bladder 300. The level of waste in the bladder can, for example, be determined based on the degree of expansion of the bladder. Examples of level sensors are shown in Figs. 6 to 11B. Whilst these examples are shown with positioning members such as shown in Fig. 4, level sensors may also be provided in examples which have different, or no positioning members.

In one example, as shown in Fig. 6 and 7, the level sensor may be an optical sensor 600 provided on the wall of the bladder 300. In the example of Fig. 6 and 7, the optical sensor is an optical fiber that is mounted to the bladder wall in a sinusoidal design where a first end 600a is an optical signal emitter and a second, opposite end 600b of the fiber is an optical signal receiver. The fiber is mounted to the bladder such that as the bladder expands and contracts, the optical fiber correspondingly expands and contracts and so the amount of light received varies with expansion of the bladder. The amount of light received by the receiver 600b is therefore indicative of the volume of the bladder and, therefore, of the amount of waste in the bladder (before draining and rinsing). It is possible to have only a single sensor. Alternately, two or more sensors may be provided for redundancy and/or for improved accuracy, particularly where the shape of the bladder may be uneven. In such a case, an average of the received light or light loss may be taken.

Figures 8 and 9 show an alternative pattern for an optical sensor 600' that operates in a manner similar to that of Figs. 6 and 7 but has a zig-zag pattern.

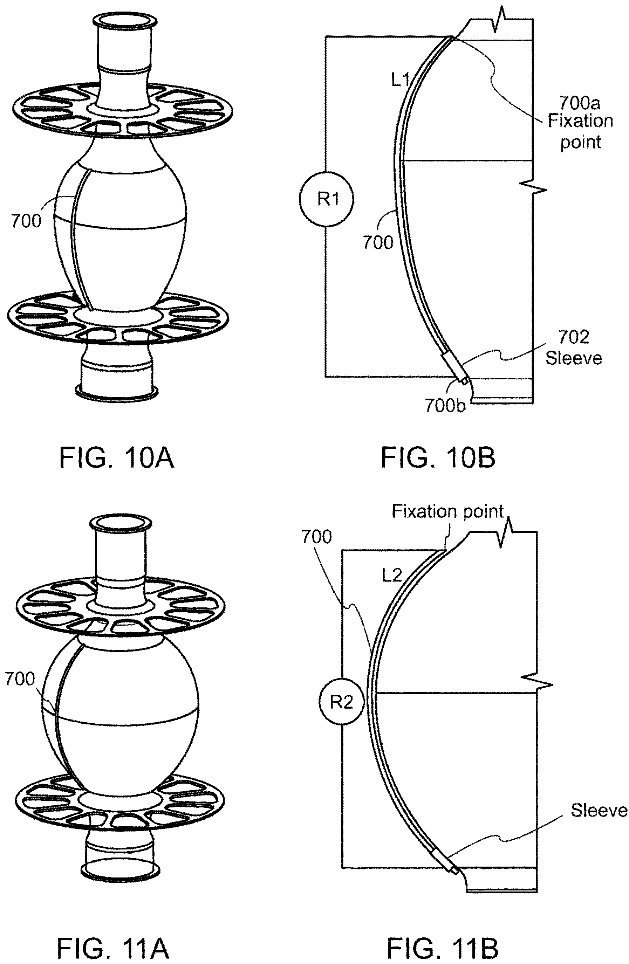

An alternative form of sensor is shown in Figs. 10A, 10B, 11A and 11B. This is a resistive sensor, using a resistive wire 700 attached to the outer surface of the bladder such that as the bladder expands and contracts the wire is stretched/reduced in length which results in a change in resistance of the wire. The resistance of the wire can be measured in any known manner across two points along the wire. Fig. 10B shows the wire having a first resistance R1 when the bladder 300 is relatively small, and so the level of waste is relatively small. In Fig. 11B, the bladder is fuller and so expands more and the resistance of the wire is greater, R2. In the example shown, one end 700a of the wire 700 is fixed to the bladder and the other end 700b is routed through a conductive sleeve 702. Again, there is no limitation on the number of wires that can be used.

The level sensors described are bale to measure the level of waste over a whole range of fullness, rather than just discrete levels.

The tank cleaning arrangement therefore allows a simpler, lighter and less expensive tank to be used and does not require the tank to be formed with a rinsing nipple and/or demister on the tank exterior, which are vulnerable to damage by impact, ice, debris etc. Various level detection solutions can be incorporated into the arrangement and effective cleaning/rinsing is possible.

## Claims

1. A tank cleaning arrangement comprising a tank (200) having an inlet (220) and an outlet (130); a flexible bladder (300) located inside the tank, the bladder having a first end (300a) in fluid communication with the tank inlet and a second end (300b) in fluid communication with the tank outlet, the bladder defining an interior to receive content via the inlet and to expel content via the outlet, the bladder positioned inside the tank such that a space (250) exists around the bladder inside the tank; the arrangement further comprising a pressure port (320) extending from outside the tank into the space around the bladder via which varying pressure can be applied to the space to cause varying expansion and contraction of the bladder.

2. The tank cleaning arrangement of claim 1, further comprising pressure control means (400) for applying varying pressure to the pressure port.

3. The tank cleaning arrangement of claim 2, wherein the pressure control means comprises a control valve (410) for selectively connecting the pressure port (320) to a source of high pressure and to a vacuum source.

4. The tank cleaning arrangement of any preceding claim, further comprising a drain valve (70) at the outlet.

5. The tank cleaning arrangement of any preceding claim, further comprising a flush valve (50) for releasing waste to the bladder via the inlet.

6. The tank cleaning arrangement of any preceding claim, further comprising a rinse valve (65) for selectively fluidly connecting the inlet to a source of cleaning fluid.

7. The tank cleaning arrangement of any preceding claim, further comprising a pressure regulating valve (420) between the interior of the bladder and the pressure port (320).

8. The tank cleaning arrangement of claim 7, wherein the pressure regulating valve is a shut-off valve.

9. The tank cleaning arrangement of any preceding claim, further comprising a level sensor attached to the bladder to detect expansion of the bladder as an indication of the level of content in the bladder

10. The tank cleaning arrangement of claim 9, wherein the level sensor is an optical sensor (600, 600')

11. The tank cleaning arrangement of claim 10, wherein the optical sensor comprises an optical fiber mounted to the bladder and having an optical signal emitting end and an optical signal receiving end.

12. The tank cleaning arrangement of claim 11, wherein the optical fiber (600, 600') is formed in a sinusoidal pattern or a zig-zag pattern on the bladder (300).

13. The tank cleaning arrangement of claim 9, wherein the level sensor is a resistive sensor (700).

14. The tank cleaning arrangement of claim 13, wherein the resistive sensor is a conductive wire (700) whose resistance changes as a function of degree of expansion of the bladder.

15. The tank cleaning arrangement of claim 14, wherein the wire (700) is fixed, at a first end (700a), to the bladder (300) and passes through a conductive sleeve (702) and an opposite, second end (700b).
